# EUROPEAN PATENT APPLICATION

(11) **EP 0 699 466 A1**
(43) Date of publication of application: **06.03.1996**
(21) Application number: 95910803.6
(22) Date of filing: 13.03.1995
(51) Int. Cl.: B01D 53/04

(54) **METHOD AND APPARATUS FOR SEPARATING GAS**

(30) Priority: 16.03.1994 JP 72562/94
(71) Applicant: SUMITOMO SEIKA CHEMICALS CO., LTD., Hyogo 675-01 (JP)
(72) Inventor: HARUNA, Kazuo Sumitomo Seika Chemicals Co., Ltd., Kako-gun, Hyogo 675-00 (JP); MIYAKE, Masanori Sumitomo Seika Chemicals Co., Ltd, Kako-gun, Hyogo 675-00 (JP); KAJI, Shinichi Sumitomo Seika Chemicals Co., Ltd., Kako-gun, Hyogo 675-00 (JP); SASANO, Hiroaki Sumitomo Seika Chemicals Co., Ltd., Kako-gun, Hyogo 675-00 (JP)
(74) Representative: Everett, Susan Jane
(86) International application number: JP9500415
(87) International publication number: WO9524958

(57) **Abstract**

A method of separating a gas according to the PSA method by removing an easily adsorbable gas by adsorption from a raw material gas consisting of the easily adsorbable gas and a difficultly adsorbable gas in an adsorbent bed and separating the difficultly adsorbable gas as a product, wherein use is made of a gas separator equipped with a dehumidifier bed on the raw material gas supply side of the adsorbent bed and with a heater between the adsorbent bed and the dehumidifier bed or inside the dehumidifier bed, and which comprises heating the raw material gas passing through the dehumidifier bed and flowing into the adsorbent bed at the time of adsorption so as to heat a low-temperature portion occuring at the raw material gas inflow portion of the adsorbent bed, and heating the adsorption gas passing through the adsorbent bed and flowing into the dehumidifier bed at the time of desorption. The invention method can improve the gas separation performance, can save heat energy, and can improve the moisture removing capacity and the regeneration effect of the dehumidifier. Accordingly, the packing quantity of the dehumidifier can be reduced to below 70 % of the quantity required conventionally.

## Description

### TECHNICAL FIELD

The present invention relates to an improved gas separation process using a pressure swing adsorption method (PSA method) wherein a less readily adsorbable gas is separated as a product from a mixed gas, and an apparatus therefor. More specifically, the present invention relates to an improved PSA method wherein air is used as a feed gas from which an oxygen gas is separated and purified by adsorbing and removing a nitrogen gas, a carbonic acid gas, and moisture, and an apparatus therefor. The oxygen gas obtained is utilized for mill electric furnaces, pulp bleaching, waste water treatment, combustion, etc.

### BACKGROUND ART

The gas separation process by a pressure swing adsorption method, where a less readily adsorbable gas is separated as a product from a mixed gas containing a more readily adsorbable gas component and the less readily adsorbable gas component, has been known widely. The process has already been used to separate and purify various kinds of gases.

However, when a feed gas containing moisture is used for the separation by the PSA method, the moisture is readily adsorbed onto an adsorbent but hardly desorbed, resulting in a reduction of adsorption capacity. When the adsorbent is continuously used under the above condition, the adsorbent is degraded so that its gas separation ability is impaired. For this reason, an embodiment where an adsorbent bed is overlaid on a desiccant bed is preferably used in order to remove the moisture in a feed gas while the gas is passing through the desiccant bed before it enters the adsorbent bed. However, a PSA apparatus which has both a desiccant bed and an adsorbent bed has recently presented a problem that temperature distribution of the adsorbent bed causes to impair the gas separation ability.

In order to explain the above situation, an embodiment, as an example, is described below. In the embodiment, air as a feed gas is introduced into a PSA apparatus equipped with an adsorption tower where an adsorbent bed packed with a zeolite molecular sieve is overlaid on a desiccant bed packed with a desiccant containing alumina as a main component, and a nitrogen gas is removed by adsorption from air to obtain an oxygen gas as a product.

In the above case, the temperature in the adsorption bed is increased in the adsorption step because about 0.2 kcal adsorption heat per one liter of adsorption gas is generated when a nitrogen gas is predominantly adsorbed in pores of the zeolite molecular sieve. The heat generated is carried on a gas flow toward the outlet of the adsorbent bed, and a part of the heat is released from the adsorption tower together with a product gas. Thus, the temperature of various portions of the adsorbent bed is not uniform. As a result, temperature in the lower part of the adsorbent becomes lower than that in the upper part.

In the desorption step, a nitrogen gas is desorbed from the adsorbent bed by depressurizing the adsorption tower to a pressure lower than that used in the adsorption step to regenerate the adsorbent. In this step, the temperature of various portions of the adsorbent bed is decreased almost uniformly because of endothermic phenomenon. The total quantity of heat generated in exothermic adsorption is equal to the total quantity of heat lost in endothermic desorption. However, as mentioned above, a part of the heat generated by exothermic adsorption is released out of the tower accompanied by the product gas, and, in terms of heat balance of the adsorption tower, the endothermic amount of heat exceeds the exothermic amount by the amount of heat released out of the tower, causing gradual decrease in the temperature thereof. On the other hand, the amount of endothermic heat in the adsorption tower is gradually decreased because the external heat is conducted via the tower wall into the tower and desorption amount of a gas is declined as the temperature in the adsorbent bed becomes low. Thus, the temperature in the adsorption tower gradually reaches a constant level.

In the manner as described above, temperature gradient is formed in the adsorbent bed, producing so called "hot spot" and "cold spot." For example, in the case where air heated to about 30°C is supplied to the adsorption tower, a hot spot of about 35°C and a cold spot of not more than -10°C are formed in the upper and lower parts of the adsorbent bed, respectively, when a thermal equilibrium is reached. Such a significant decrease in the temperature of the lower part of the adsorbent bed impairs the gas separation ability of the apparatus.

Specifically, although the temperature range where a zeolite molecular sieve shows good performance depends on the type of the sieve, the highest separation efficiency can be usually achieved in the temperature range of from 10 to 60°C. As mentioned above, gas separation efficiency is enhanced in the hot portion where temperature reaches about 35°C. On the contrary, in the cold portion where temperature decreases below -10°C, though the adsorbent ability itself is enhanced, the adsorbed gas becomes hardly desorbed. Therefore, a readily adsorbable nitrogen gas is accumulated in pores of the adsorbent to reduce the adsorption capacity, and the efficiency of separating a nitrogen gas from an oxygen gas becomes undesirably poor.

The degree of the temperature gradient is affected by some factors including the amount of the nitrogen gas adsorbed and the size of the adsorption tower. That is, the degree of the temperature gradient becomes greater as the separation ability of the adsorbent used is improved, or as the size of the adsorption tower becomes large. Because of the recent trend of using larger apparatuses and high-performance adsorbents, the above matter has become more actual problem than before.

To solve the above problem, several approaches have been proposed to raise the temperature of the cold portion formed in the feed gas entering portion of the adsorbent bed. Examples are as follows:
(1) A method where an adsorbent is overlaid on the desiccant in an adsorption tower; a thermo-couple is inserted into each of the hot portion in the upper part and the cold portion in the lower part of the adsorbent bed and directly connected; and the mixed gas is heated with an electric heater installed at the inlet of the desiccant bed utilizing the thermal electromotive force generated by the difference in temperature (Japanese Patent Laid-Open No. 4-322714);
(2) A method where an adsorbent bed is partitioned by a metal plate placed in the axial direction of the adsorption tower (in the direction of gas flow) to transfer the heat from the adsorbent bed outlet to the lower part by thermal conduction (toward the feed gas entering side); and
(3) A method where heat is exchanged between adsorption towers using a heat pump.

However, any of the above approaches have not achieved sufficient effect and are not yet in the actual use.

In the above situation, a method in which a mixed gas flowing into a desiccant bed is forcibly heated using a heat source such as a heat exchanger and an electric heater has widely been employed. However, in this method, the cold portion cannot be heated sufficiently in the adsorption step because the heated mixed gas is cooled during passing through the cold desiccant bed before it reaches the cold portion of the adsorbent bed. In addition, this method has a drawback that the heated mixed gas raises the temperature of the desiccant and impairs the moisture removing ability. In some extreme cases, the moisture which remains in a feed gas enters the upper adsorption bed and may impair the gas separation ability of the adsorbent because of insufficient moisture removal in the desiccant bed. In the desorption step, the method poses a problem of poor efficiency of desiccant regeneration, because the desiccant bed, where desiccant is regenerated by heating, is cooled by the introduction of desorption gas of which temperature has been decreased during endothermic desorption.

### DISCLOSURE OF INVENTION

An object of the present invention is to provide a gas separation process in which the efficiencies of gas separation and desiccant regeneration can be improved by raising the temperature of a cold portion formed in the lower part of an adsorbent bed and keeping the temperature of a desiccant bed high during a desorption step.

Another object of the present invention is to provide a gas separation apparatus suitably used for the above gas separation process.

In order to achieve the above objects, techniques described below are employed.

In brief, the present invention is concerned with:
(1) A gas separation process by a PSA method wherein a less readily adsorbable gas component is separated as a product from a feed gas containing the less readily adsorbable gas component and a more readily adsorbable gas component by adsorbing and removing the more readily adsorbable gas component, characterized by carrying out a gas separation process using a gas separation apparatus equipped with a desiccant bed provided on a feed gas supplying side of an adsorbent bed and a heater arranged between the adsorbent bed and the desiccant bed, wherein the feed gas flowing through the desiccant bed into the adsorbent bed is heated in order to raise temperature of a cold portion formed in a feed gas entering portion of the adsorbent bed during an adsorption step, and wherein a desorption gas flowing through the adsorbent bed into the desiccant bed is heated during a desorption step;
(2) A gas separation process by a PSA method wherein a less readily adsorbable gas component is separated as a product from a feed gas containing the less readily adsorbable gas component and a more readily adsorbable gas component by adsorbing and removing the more readily adsorbable gas component, characterized by using a gas separation apparatus comprising a desiccant bed provided on a feed gas supplying side of an adsorbent bed and a heater installed inside the desiccant bed, wherein the feed gas flowing through the desiccant bed into the adsorbent bed is heated in order to raise temperature of a cold portion formed in a feed gas entering portion of the adsorbent bed during an adsorption step, and wherein a desorption gas flowing through the adsorbent bed into the desiccant bed is heated during a desorption step;
(3) The process as described in (1) or (2) above, wherein the adsorbent bed comprises a zeolite molecular sieve and the feed gas is air;
(4) The process as described in (1) or (2) above, wherein gas temperature at the feed gas entering portion of the adsorbent bed is in the range of from 10 to 60°C during the adsorption step;
(5) The process as described in (1) or (2) above, wherein gas temperature in the desorption gas entering portion of the desiccant bed is in the range of from 10 to 60°C during the desorption step;
(6) The process as described in (1) or (2) above, wherein the adsorption step is conducted under a pressure of from atmospheric pressure to 4 kg/cm²G, and the desorption step is conducted under a pressure of from atmospheric pressure to 150 torr;
(7) The process as described in (2) above, wherein the adsorbent bed is overlaid on the desiccant bed, and wherein the heater is arranged on the adsorbent bed side in the desiccant bed;
(8) The process as described in (7) above, wherein the heater is installed within a half the height of the desiccant bed from the adsorbent bed side end;
(9) An apparatus for gas separation by a PSA method equipped with a desiccant bed on a feed gas supplying side of an adsorbent bed, characterized by comprising a heater arranged between the adsorbent bed and the desiccant bed;
(10) An apparatus for gas separation by a PSA method equipped with a desiccant bed on a feed gas supplying side of an adsorbent bed, characterized by comprising the adsorbent bed overlaid on the desiccant bed and a heater installed on the adsorbent bed side in the desiccant bed;
(11) The apparatus as described in (9) above, wherein the adsorbent bed is housed in an adsorption tower, and the desiccant bed is housed in a desiccant tower;
(12) The apparatus as described in (9) or (10) above, wherein compression heat generated upon pressurizing the feed gas is used as a heat source for the heater;
(13) The apparatus as described in (9) or (10) above, wherein heat generated at a hot portion in the upper part of the adsorbent bed is used as a heat source for the heater; and
(14) The apparatus as described in (10) above, wherein the heater is installed within a half the height of the desiccant bed from the adsorbent bed side end.

### BRIEF DESCRIPTION OF DRAWINGS

Figure 1 is a schematic view showing a preferred embodiment of an apparatus of the present invention;
Figure 2 is a schematic view showing a preferred embodiment of an apparatus of the present invention;
Figure 3 is a schematic view showing a preferred embodiment of an apparatus of the present invention;
Figure 4 is a schematic view showing a preferred embodiment of an apparatus of the present invention;
Figure 5 is a schematic view showing one of conventional apparatuses;
Figure 6 is a graph showing a temperature distribution of various portions of an adsorption tower when using a conventional apparatus;
Figure 7 is a graph showing a temperature distribution of various portions of an adsorption tower when using an apparatus (first embodiment) of the present invention;
Figure 8 is a schematic view showing a preferred embodiment of an apparatus of the present invention; and
Figure 9 is a graph showing a temperature distribution of various portions of an adsorption tower when using an apparatus (second embodiment) of the present invention.

In the figures, 1 denotes an adsorbent bed; 2, a desiccant bed; 3, a heater; 4, a blower; 5, a vacuum pump; and 6, a switch over valve.

### BEST MODE FOR CARRYING OUT THE INVENTION

There are two embodiments for the gas separation process of the present invention: one is that a heater is arranged between an adsorbent bed and a desiccant bed to heat the gas passing through the beds, i.e., the heater is to heat the feed gas flowing through the desiccant bed into the adsorbent bed to raise the temperature of a cold portion formed in the feed gas entering portion of the adsorbent bed during the adsorption step and to heat the desorption gas desorbed from the desiccant bed to improve the efficiency of regeneration of the desiccant during the desorption step. The other embodiment is that an adsorbent bed is overlaid on a desiccant bed inside of which a heater is arranged to obtain the same effect as the above. These processes are described in detail below.

The PSA apparatus of the present invention is not particularly limited as long as it has a desiccant bed on the feed gas supplying side and an adsorbent bed above the desiccant bed. The desiccant bed may be incorporated in an adsorption tower, or may be housed in a desiccant tower independent of the adsorption tower. Those having 2 to 3 adsorption towers are usually used. The operating conditions for the PSA apparatus used for the present invention are not limited, and the apparatus is usually operated under an adsorption pressure of from atmospheric pressure to about 4 kg/cm²G and a desorption pressure of from atmospheric pressure to about 150 torr.

Any adsorbents may be used for the present invention, preferred example of which is zeolite molecular sieves. Examples of zeolite molecular sieves used in the present invention include those of Na A-type, Na X-type, Ca A-type and Ca X-type, with a preference given to zeolite molecular sieve of Ca A-type and Ca X-type.

Any desiccants may be used for the present invention as long as the moisture of feed gas can be removed. Desiccants such as activated alumina, silica gel and molecular sieve are used, with a preference given to a desiccant having alumina as a main component.

The type of the heater used for the present invention is not particularly limited. Heaters of any type such as electric heaters, shell and tube type heat exchangers, coiled heat exchangers, and jacket type heat exchangers, may be used as long as the gas passing through the heater can be heated. Heat source is not particularly limited. Any heat sources, such as electricity, steam, hot water, heat of the hot portion (hot spot) in the upper part of the adsorbent bed, compression heat generated upon pressurizing the feed gas, may be used as long as the gas flowing through the heater can be heated.

The suitable temperature range of the feed gas during the adsorption step varies with the type of adsorbent used. The feed gas is usually heated so that the temperature of the feed gas at the feed gas entering portion of the adsorbent bed is in the range of from 10 to 60 °C. The suitable range of the temperature of the desorption gas during the desorption step varies with the type of desiccant used. The desorption gas is usually heated so that the temperature of the desorption gas at the adsorption gas entering portion of the desiccant bed is in the range of from 10 to 60°C.

The heater is arranged preferably in the place where not less than 10 cm of heating zone is secured in the direction of the gas flow in order to heat a feed gas sufficiently. Therefore, the heater is arranged in the space formed between the adsorbent bed and the desiccant bed (first embodiment); or when design of an apparatus or something like that does not allow such space, the heater may be installed in the desiccant bed, preferably on the adsorbent bed side in the desiccant bed (second embodiment). Either of the embodiments may be employed in the present invention. In the second embodiment, as compared with the first embodiment, the moisture removing ability and desiccant regeneration efficiency are somewhat adversely affected, but it allows to achieve simplification and downsizing of the apparatus because supporting members for the adsorbent bed, etc. are not necessary.

In the first embodiment, the adsorbent bed and the desiccant bed may be housed in two separate towers (adsorption tower and desorption tower). In this case, it is also preferable to install a heater in the connection line between an adsorption tower and a desorption tower.

In the second embodiment, the place where a heater is installed is not particularly limited. The heater is usually installed in the desiccant bed within a half, preferably one third of the height of the desiccant bed from the adsorbent bed side end.

As described above, the present invention is concerned with a gas separation apparatus by a PSA method, which comprises a desiccant bed on the feed gas supplying side of an adsorbent bed, characterized by having a heater between the adsorbent bed and the desiccant bed, or which comprises a desiccant bed on which an adsorbent bed is overlaid, characterized by having a heater on the adsorbent bed side inside the desiccant bed.

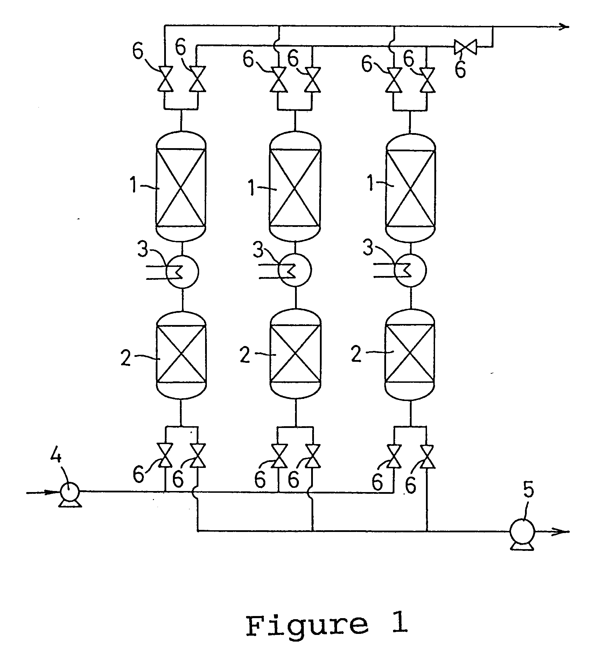

An embodiment (first embodiment) of the present invention where an oxygen gas is separated from air as a product is illustrated in Figures 1 to 4 below.

In Figure 1, an adsorbent bed 1 and a desiccant bed 2 are respectively housed in two separate towers, and a heater 3 is arranged on the connection line. Using three sets of this combination, adsorption is conducted by supplying air pressurized at several hundreds mmH₂O into the sets using a blower, and desorption is conducted by reducing the pressure to 200 torr using a vacuum pump.

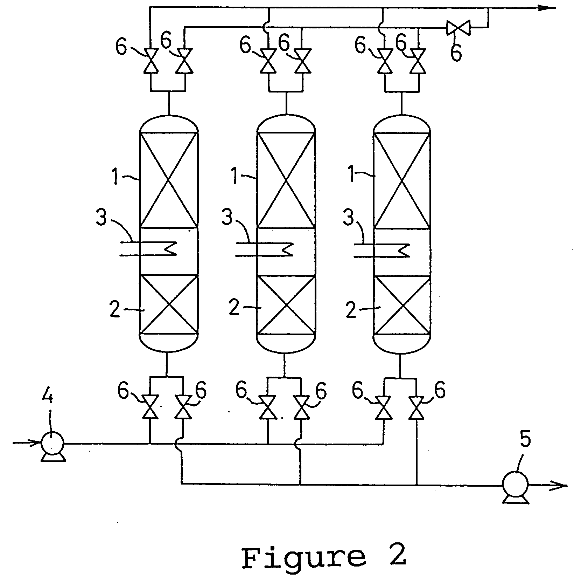

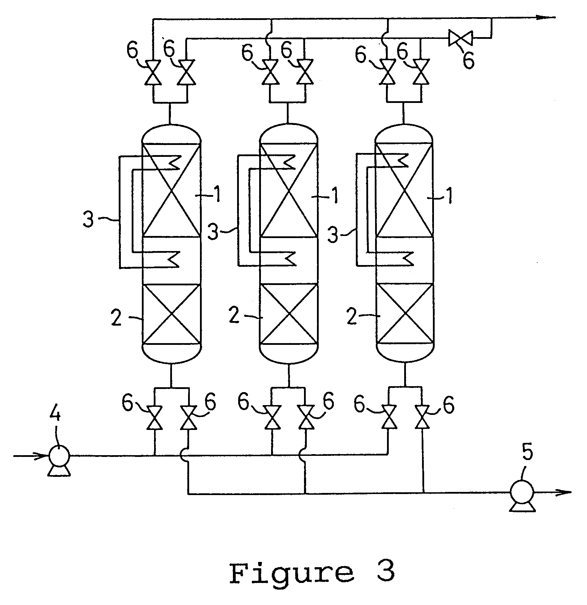

Figures 2 to 4 show embodiments in which a desiccant bed is housed in an adsorption tower. In the embodiments of Figures 2 and 3, a space is provided between an adsorbent bed 1 and a desiccant bed 2, and a heater 3 is installed in the space. In the embodiment of Figure 2, an external heat source such as electricity, steam, and hot water is introduced into a heater 3. In Figure 3, heat is conducted from the hot portion formed on the outlet side in the adsorbent bed 1 to a heater 3 using water, thermal oil or the like as a heat medium.

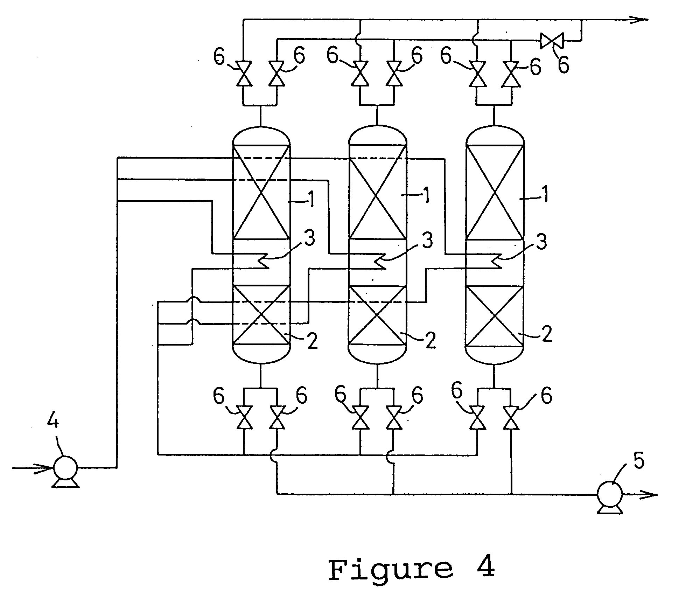

Figure 4 shows an embodiment in which a space is provided between an adsorbent bed 1 and a desiccant bed 2, and a heater 3 is installed in the space. In this embodiment, adsorption is conducted by supplying air pressurized at, for example, about 0.5 kg/cm²G using a blower 4, and desorption is conducted by reducing the pressure to 200 torr using a vacuum pump 5. This embodiment differs from those in Figures 1 to 3 in that air used as a feed gas which is pressurized by a blower to have an increased temperature of from about 40 to 90°C is itself used as a heat source. The temperature of the air used varies with the degree of pressurization. In this embodiment, external energy sources such as electricity, steam, and hot water are not needed and heating energy can be significantly saved. All the embodiments in Figures 1 to 4 use three adsorption towers, but the present invention is not limited to those using 3 towers. Those using two or more towers may be used in the present invention.

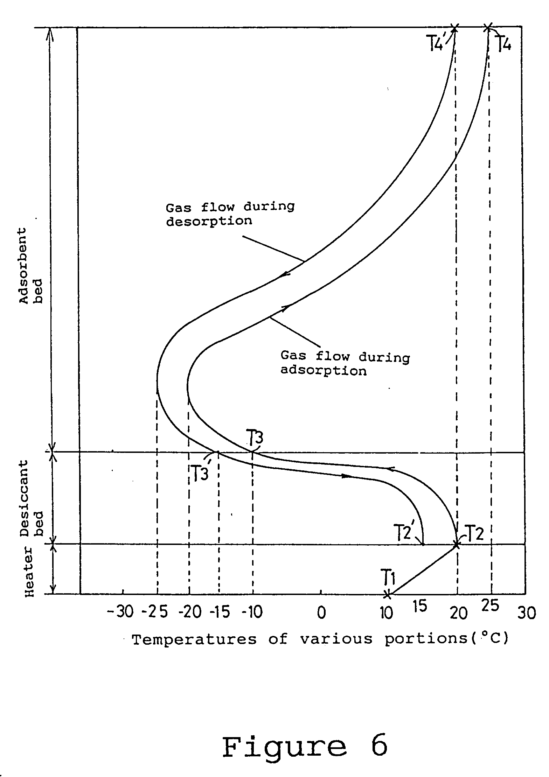

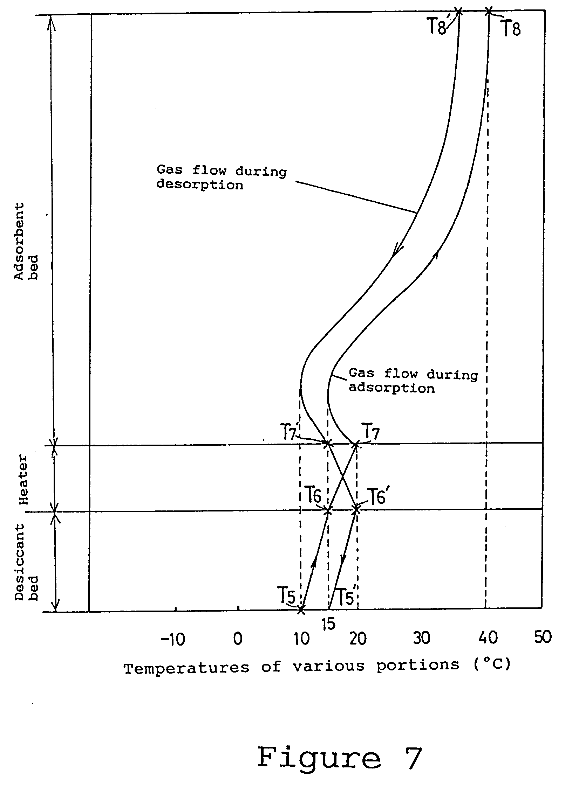

According to the above configuration, the temperature of a cold portion formed at the feed gas entering portion of the adsorbent bed can effectively be raised by heating the feed gas which flows through the desiccant bed into the adsorbent bed. During the desorption step, a desorption gas having a higher temperature than in a conventional process can be introduced into a desiccant bed by heating the desorption gas desorbed from the adsorbent bed, thereby the efficiency of desiccant regeneration is improved. In order to explain this, temperature distributions of various portions of an adsorption tower in a conventional apparatus and that in an apparatus of the present invention are shown in Figures 6 and 7, respectively.

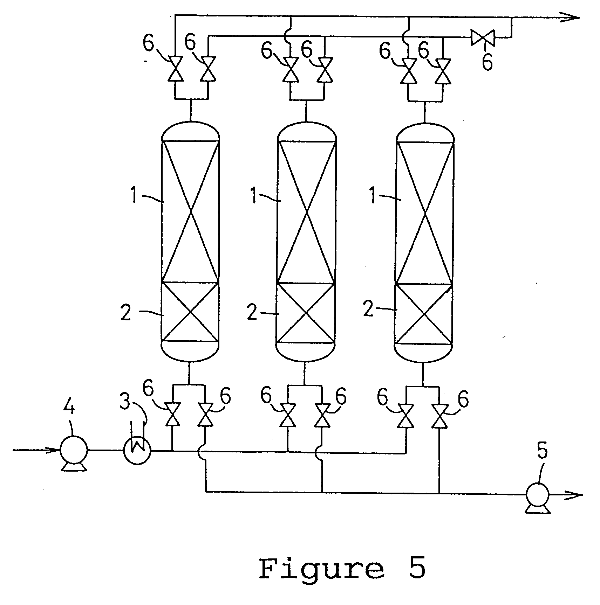

Specifically, Figure 6 shows a temperature distribution inside an adsorption tower used in a conventional process (Figure 5) in which a feed gas is heated before it enters a desiccant bed. In the figure, the line linking T₁, T₂, T₃ and T₄ indicates the final temperature distribution of various portions in the adsorption tower after an adsorption step, and the line linking T₂', T₃' and T₄' indicates the final temperature distribution of the corresponding portions after a desorption step. In the adsorption step, the feed gas having a temperature of T₁ is introduced into a heater where it is heated to a temperature of T₂ and enters a desiccant bed. Since the temperature of the desiccant bed is decreased during a desorption step in the preceding cycle, the feed gas is cooled to a temperature of T₃ when it reaches at the outlet of the desiccant bed, and enters the adsorbent bed. In the adsorbent bed, the temperature of the gas is further decreased in the cold portion, and then increased to have a temperature of T₄ at the outlet of the adsorbent bed by the heat generated during exothermic adsorption. In the desorption step, the temperatures of various portions of the apparatus are decreased almost uniformly because of endothermic desorption and settle down at the temperature distribution indicated by the line linking T₄', T₃', and T₂'. As shown in Figure 5, T₁' corresponding to T₁ does not exist because the desorption gas does not pass through the heater during desorption.

Figure 7 is a temperature distribution of various portions in an adsorption tower of the present invention (first embodiment) where a heater is arranged between a desiccant bed and an adsorption bed. In the figure, the line linking T₅, T₆, T₇, and T₈ indicates the final temperature distribution of the adsorption tower after the adsorption step, and the line linking T₅', T₆', T₇' and T₈' indicates the final temperature distribution after the desorption step. In the adsorption step, a feed gas having a temperature of T₅ enters the desiccant bed. As the temperature of desiccant bed has already been increased by heating for regeneration, the gas absorbs the heat to have a temperature of T₆ when it reaches the outlet of the desiccant bed and then enters the heater. The feed gas heated to a temperature of T₇ in the heater enters the adsorption bed. After the gas is cooled in the cold portion, the gas temperature is increased during exothermic adsorption to have a temperature of T₈ when the gas reaches the outlet. In the desorption step, the temperatures of various portions of the apparatus are decreased almost uniformly because of endothermic desorption. Then, the gas is heated in a heater and its temperature settles down at the temperature distribution indicated by the line linking T₈', T₇', T₆' and T₅' after the desorption step.

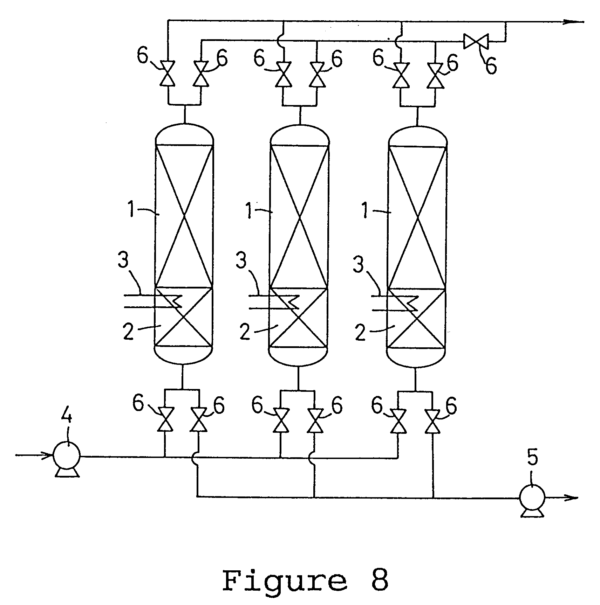

Next, an embodiment (second embodiment) where an oxygen gas is separated from air as a product is illustrated in Figure 8.

In the embodiment of Figure 8, an adsorbent bed 1 is overlaid on a desiccant bed 2, and a heater 3 is installed on the adsorbent bed side inside the desiccant bed 2. Using three sets of this combination, adsorption is conducted by supplying air pressurized at several hundreds mmH₂O into the sets using a blower, and desorption is conducted by reducing the pressure to 200 torr using a vacuum pump.

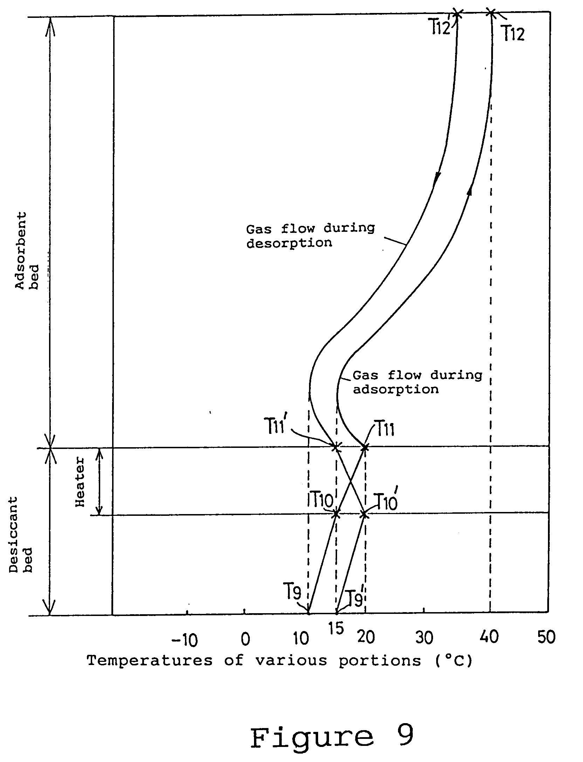

Figure 9 shows a temperature distribution in an adsorption tower of this embodiment. In the figure, the line linking T₉, T₁₀, T₁₁ and T₁₂ indicates the final temperature distribution of various portions of the adsorption tower after the adsorption step, and the line linking T₉', T₁₀', T₁₁' and T₁₂' indicates the final temperature distribution after the desorption step. In the adsorption step, a feed gas having a temperature of T₉ is introduced into the desiccant bed. As the temperature of the desiccant bed has already been increased by heating for regeneration, the gas absorbs the heat to have a temperature of T₁₀ and is further heated in a heater installed inside the desiccant bed to have a temperature of T₁₁ when reaching the outlet of the desiccant bed. Then, the gas enters the adsorption bed and is cooled in the cold portion. Then the gas temperature is increased by the heat generated during exothermic adsorption to reach a temperature of T₁₂ at the outlet. In the desorption step, the temperatures of various portions of the desorbent bed are decreased almost uniformly because of endothermic desorption. Then, the gas is heated in a heater and its temperature settles down at the temperature distribution indicated by the line linking T₁₂', T₁₁', T₁₀' and T₉' after the desorption step.

The present invention will be explained more specifically by the following working examples and comparative example, without restricting the present invention thereto.

### Example 1

Figure 2 is a schematic flow sheet of an apparatus used in this example.

Seventy kilograms of a desiccant having alumina as a main component was filled at a height of 20 cm in a bottom portion of an adsorption tower having a diameter of 0.8 m and a height of 3.1 m to provide a desiccant bed 2. A space with a height of 20 cm was provided on the upper portion of the desiccant bed 2, and an electric heater 3 of 0.5 kW was arranged in the space. Six-hundred kilograms of Ca A-type zeolite was filled in the upper portion of the space at a height of 2.0 m to provide an adsorbent bed 1. Here, the capacity of the electric heater was determined so as to elevate the air temperature by 5°C. A PSA apparatus equipped with these three adsorption towers was used to separate an oxygen gas by a PSA method using switch over valves 6, comprising the steps of pressurizing air having a temperature of 10°C with a blower 4 to give a pressure of 500 mm H₂O, carrying out an adsorption step by supplying the pressurized air in an adsorption tower, and carrying out a desorption step by reducing the pressure inside the adsorption tower to a pressure of 230 torr with a vacuum pump 5. In the PSA method, the total cycle time of the three steps, namely, adsorption, desorption, and pressurization, was 180 seconds per cycle.

As a result, an oxygen gas with 93 vol% concentration was obtained at a rate of 29.0 N·m³/h, and the yield of the oxygen gas was 49%. Also, as a result of analyzing a dew point by taking out a sample from the feed gas at a feed gas outlet of the desiccant bed 2, it was found to be -60°C. The temperature distribution inside the adsorption tower during the operation was measured, and the results are shown in Figure 7. As shown in Figure 7, T₅ was 10°C, T₆ was 15°C, T₇ was 20°C, T₈ was 40°C, T₅' was 15°C, T₆' was 20°C, T₇' was 15°C, and T₈' was 35°C.

As shown in Figure 7, although the temperature of the cold portion of the lower portion of the adsorbent bed during the adsorption step was -20°C in Comparative Example given below, the temperature of the cold portion of the present example was 15°C, higher than that of Comparative Example by 35°C, even though the heater had an electric capacity of one-half that of Comparative Example. In addition, the moisture removing effect can be further improved when compared with Comparative Example, even though the amount of the desiccant was smaller than that of Comparative Example by 30 kg.

### Example 2

Figure 8 is a schematic flow sheet of an apparatus used in this example.

One-hundred kilograms of a desiccant having alumina as a main component was filled at a height of 30 cm in a bottom portion of an adsorption tower having a diameter of 0.8 m and a height of 3.0 m to provide a desiccant bed 2. An electric heater 3 of 0.5 kW was installed inside the desiccant bed 2 at a distance 10 cm away from the adsorbent bed side end. Six-hundred kilograms of Ca A-type zeolite was filled and overlaid atop the desiccant bed at a height of 2.0 m to provide an adsorbent bed 1. Here, the capacity of the electric heater was determined so as to elevate the air temperature by 5°C. A PSA apparatus equipped with these three adsorption towers was used to separate an oxygen gas by a PSA method using switch over valves 6, comprising the steps of pressurizing air having a temperature of 10°C with a blower 4 to give a pressure of 500 mm H₂O, carrying out an adsorption step by supplying the pressurized air in an adsorption tower, and carrying out a desorption step by reducing the pressure inside the adsorption tower to a pressure of 230 torr with a vacuum pump 5. In the PSA method, the total cycle time of the three steps, namely, adsorption, desorption, and pressurization, was 180 seconds per cycle.

As a result, an oxygen gas with 93 vol% concentration was obtained at a rate of 28.4 N·m³/h, and the yield of the oxygen gas was 48%. Also, as a result of analyzing a dew point by taking out sample from a feed gas at a feed gas outlet of the desiccant bed 2, it was found to be -60°C. The temperature distribution inside the adsorption tower during the operation was measured, and the results are shown in Figure 9. As shown in Figure 9, T₉ was 10°C, T₁₀ was 15°C, T₁₁ was 20°C, T₁₂ was 40°C, T₉' was 15°C, T₁₀' was 20°C, T₁₁' was 15°C, and T₁₂' was 35°C.

As shown in Figure 9, although the temperature of the cold portion of the lower portion of the adsorbent bed during the adsorption step was -20°C in Comparative Example given below, the temperature of the cold portion of the present example was 15°C, higher than that of Comparative Example by 35°C, even though the heater had an electric capacity of one-half that of Comparative Example. In addition, the moisture removing effect can be further improved when compared with Comparative Example, with the same amount of the desiccant as in Comparative Example.

### Comparative Example 1

Figure 5 is a schematic flow sheet of an apparatus used in this comparative example.

One-hundred kilograms of a desiccant having alumina as a main component was filled at a height of 30 cm in a bottom portion of an adsorption tower having a diameter of 0.8 m and a height of 3.0 m to provide a desiccant bed 2. Six-hundred kilograms of Ca A-type zeolite was filled and overlaid atop the desiccant bed at a height of 2.0 m to provide an adsorbent bed 1. A PSA apparatus equipped with these three adsorption towers was used to separate an oxygen gas by a PSA method using switch over valves 6, comprising the steps of pressurizing air having a temperature of 10°C with a blower 4 to give a pressure of 500 mm H₂O, carrying out an adsorption step by supplying the pressurized air in an adsorption tower while maintaining the air temperature at 20°C with an electric heater 3 of 1kW, carrying out a desorption step by reducing the pressure inside the adsorption tower to a pressure of 230 torr with a vacuum pump 5, and separating an oxygen gas. In the PSA method, the total cycle time of the three steps, namely, adsorption, desorption, and pressurization, was 180 seconds per cycle.

As a result, an oxygen gas with 93 vol% concentration was obtained in a rate of 25.6 N·m³/h, and the yield of the oxygen gas was 44%. Also, as a result of analyzing a dew point by taking out a sample from a feed gas at a feed gas outlet of the desiccant bed 2, the dew point was -55°C. The temperature distribution inside the adsorption tower during the operation was measured, and the results are shown in Figure 6. As shown in Figure 6, T₁ was 10°C, T₂ was 20°C, T₃ was -10°C, T₄ was 25°C, T₂' was 15°C, T₃' was -15°C, and T₄' was 20°C. The temperature of the cold portion of the adsorbent bed during the adsorption step was -20°C.

### INDUSTRIAL APPLICABILITY

According to the process of the present invention:
(1) The gas separation ability of a PSA apparatus is improved because the temperature of a cold portion formed at the lower portion of the adsorbent bed is significantly raised to maintain the whole region of the adsorbent bed within a temperature range suitable for adsorption; and
(2) Unlike conventional processes, the cold portion of the adsorbent bed is heated at close range to give the following advantages:
   1) The heat energy to raise the temperature of a cold portion can be saved as compared with a conventional process. Especially when the compression heat generated when the feed gas is pressurized is used as a heat source, it can be significantly saved;
   2) Since the temperature of a desiccant bed is kept lower than in a conventional process during an adsorption step, the moisture removing ability of desiccant is improved;
   3) Since the temperature of a desiccant bed is kept higher than in a conventional process during a desorption step, the desiccant regeneration effect can be enhanced; and
   4) Because of 2) and 3) above, the quantity of desiccant packed for obtaining the same amount of a product gas can be reduced to below 70% of that required in conventional processes, whereby allows to make the capacity of a vacuum pump smaller than that required conventionally to achieve the same reduction in pressure during a desorption step. Therefore, the same amount of a product gas can be obtained even when a vacuum pump smaller than a conventional one is used.

## Claims

1. A gas separation process by a PSA method wherein a less readily adsorbable gas component is separated as a product from a feed gas containing the less readily adsorbable gas component and a more readily adsorbable gas component by adsorbing and removing the more readily adsorbable gas component, characterized by carrying out a gas separation process using a gas separation apparatus equipped with a desiccant bed provided on a feed gas supplying side of an adsorbent bed and a heater arranged between the adsorbent bed and the desiccant bed, wherein the feed gas flowing through the desiccant bed into the adsorbent bed is heated in order to raise temperature of a cold portion formed in a feed gas entering portion of the adsorbent bed during an adsorption step, and wherein a desorption gas flowing through the adsorbent bed into the desiccant bed is heated during a desorption step.

2. A gas separation process by a PSA method wherein a less readily adsorbable gas component is separated as a product from a feed gas containing the less readily adsorbable gas component and a more readily adsorbable gas component by adsorbing and removing the more readily adsorbable gas component, characterized by using a gas separation apparatus comprising a desiccant bed provided on a feed gas supplying side of an adsorbent bed and a heater installed inside the desiccant bed, wherein the feed gas flowing through the desiccant bed into the adsorbent bed is heated in order to raise temperature of a cold portion formed in a feed gas entering portion of the adsorbent bed during an adsorption step, and wherein a desorption gas flowing through the adsorbent bed into the desiccant bed is heated during a desorption step.

3. The process according to claim 1 or 2, wherein the adsorbent bed comprises a zeolite molecular sieve and the feed gas is air.

4. The process according to claim 1 or 2, wherein gas temperature at the feed gas entering portion of the adsorbent bed is in the range of from 10 to 60°C during the adsorption step.

5. The process according to claim 1 or 2, wherein gas temperature in the desorption gas entering portion of the desiccant bed is in the range of from 10 to 60°C during the desorption step.

6. The process according to claim 1 or 2, wherein the adsorption step is conducted under a pressure of from atmospheric pressure to 4 kg/cm²G, and the desorption step is conducted under a pressure of from atmospheric pressure to 150 torr.

7. The process according to claim 2, wherein the adsorbent bed is overlaid on the desiccant bed, and wherein the heater is installed on the adsorbent bed side in the desiccant bed.

8. The process according to claim 7, wherein said heater is installed within a half the height of the desiccant bed from the adsorbent bed side end.

9. An apparatus for gas separation by a PSA method equipped with a desiccant bed on a feed gas supplying side of an adsorbent bed, characterized by comprising a heater arranged between the adsorbent bed and the desiccant bed.

10. An apparatus for gas separation by a PSA method equipped with a desiccant bed on a feed gas supplying side of an adsorbent bed, characterized by comprising the adsorbent bed overlaid on the desiccant bed and a heater installed on the adsorbent bed side in the desiccant bed.

11. The apparatus according to claim 9, wherein said adsorbent bed is housed in an adsorption tower, and said desiccant bed is housed in a desiccant tower.

12. The apparatus according to claim 9 or 10, wherein compression heat generated upon pressing the feed gas is used as a heat source for the heater.

13. The apparatus according to claim 9 or 10, wherein heat generated at a hot portion in the upper part of the adsorbent bed is used as a heat source for the heater.

14. The apparatus according to claim 10, wherein said heater is installed within a half the height of the desiccant bed from the adsorbent bed side end.
